# EUROPÄISCHE PATENTSCHRIFT

(11) **EP 0 903 475 B1**
(45) Veröffentlichungstag und Bekanntmachung des Hinweises auf die Patenterteilung: **20.03.2002**
(21) Anmeldenummer: 98112348.2
(22) Anmeldetag: 03.07.1998
(51) Int. Cl.: F01M 13/00, F16H 57/02

(54) **Entlüftungssystem für Fahrzeugaggregate mit Ölhaushalten**
Venting system for oil lubricated vehicle units
Système de purge pour agrégats de vehicules avec graissage à l'huile

(30) Priorität: 20.08.1997 DE 19736071; 17.04.1998 DE 19817054
(43) Veröffentlichungstag der Anmeldung: 24.03.1999
(73) Patentinhaber: MAN Nutzfahrzeuge Aktiengesellschaft, 80976 München (DE)
(72) Erfinder: Schaller, Karl-Viktor, Dr.-Ing., 82194 Gröbenzell (DE); Heuer, Fritz, 35238 Petershausen (DE)

(56) Entgegenhaltungen:
- DE-A- 19 523 454
- US-A- 3 489 034

## Beschreibung

Die Erfindung bezieht sich auf ein Entlüftungssystem für Fahrzeugaggregate mit Ölhaushalten.

Fahrzeugaggregate, wie beispielsweise Achsen oder Getriebe, weisen allgemein eine Entlüftung auf, mittels dieser Druckschwankungen im Innenraum der Fahrzeugaggregate mit der Umgebung ausgeglichen werden können. Dabei kann im Falle einer Abkühlung in den Fahrzeugaggregaten, beispielsweise durch deren Kontakt mit kalten Medien, ein Unterdruck entstehen, wodurch Umgebungsluft in die Fahrzeugaggregate eingesaugt wird. Diese Umgebungsluft kann mit Schmutz und/oder Wasser verunreinigt sein und zusammen mit der angesaugten Luft in den Innenraum der Fahrzeugaggregate gelangen, was sich für diese schädigend auswirken kann.

Aus der DE 195 23 454 A1 ist eine Belüftungs- und Entlüftungsvorrichtung für Getriebe und Achsen bekannt, bei der für die Be- und Entlüftung jeweils ein separater Belüftungskanal bzw. Entlüftungskanal mit jeweils einer Belüftungs- bzw. Entlüftungsöffnung in einer Gehäusewand vorgesehen ist. Dabei ist der Entlüftungskanal mit einem sich nach außen hin öffnenden Überdruckventil und der Belüftungskanal mit einem sich mit Unterdruck in Richtung des Getriebe- bzw. Achsinneren hin öffnenden, vorgespannten Ventilglied versehen. Der Belüftungskanal ist mit einem zwischen der äußeren Belüftungsöffnung und dem Ventilglied angeordneten, gasdurchlässigen Abdeckglied versehen. Diese Vorrichtung ist technisch relativ aufwendig darstellbar.

Der Erfindung liegt die Aufgabe zugrunde, ein Entlüftungssystem für Fahrzeugaggregate mit Ölhaushalten zu schaffen, das bei technisch geringem Aufwand die Funktion der Fahrzeugaggregate dauerhaft garantiert.

Diese Aufgabe wird erfindungsgemäß durch die Merkmale des Anspruches 1 gelöst.

Durch das Vorsehen eines erfindungsgemäßen separaten Behälters sind zunächst sämtliche Entlüftungsanschlüsse von Fährzeugaggregaten mit abgeschlossenen Ölhaushalten, wie z. B. Schaltgetriebe, Verteilergetriebe, Achsen, Kupplungen, Bremsen leitungsmäßig zusammenschließbar und über eine im Behälter vorgesehene gemeinsame Auslaßöffnung in die Umgebung entlüftbar. Der Behälter ist dabei mit wenigstens einem, gereinigte Druckluft führenden Druckluftventil eines Fahrzeugaggregates verbunden, so daß die aus dem Druckluftventil entweichende, beispielsweise im Fahrzeugeinsatz entstehende Abluft den Behälter spült. Diese Abluft ist beispielsweise im Falle des Anschlusses des Behälters an die Druckluftaufbereitungsanlage des Fahrzeuges bereits gereinigt und getrocknet. Bei Unterdruck in einem Fahrzeugaggregat kann das hierbei zu ergänzende Volumen an Luft aus der sauberen Behälterluft des Behälters entnommen werden. Ein Eindringen von Wasser und Schmutz in die betreffenden Fahrzeugaggregate bleibt somit wirksam unterbunden. Der leitungsmäßige Anschluß der Luftauslässe der zusätzlichen Fahrzeugäggregate an dem Behälter kann über eine gemeinsame Sammelleitung oder jeweils separat erfolgen.

Gemäß einer weiteren Ausgestaltung der Erfindung, kann an der Auslaßöffnung eine Drosselstelle vorgesehen sein. Durch diese ist ein Schmutzeintrag von der Umgebung in das Innere des Behälters vermieden.

Gemäß einer weiteren Ausgestaltung der Erfindung kann die Drosselstelle nur in Richtung der Umgebung durchlässig sein. Auf diese Weise ist ein Eindringen verunreinigter Luft in den Behälter und der Fahrzeugaggregate wirksam unterbunden.

Gemäß einer weiteren Ausgestaltung der Erfindung kann anstelle der Drosselstelle oder zusätzlich zu dieser ein Filter installiert sein. Dieser kann unmittelbar an der Drosselstelle angeschlossen sein. Hierdurch kann ein Eindringen verunreinigter Luft in den Behälter reduziert oder vermieden werden.

Gemäß einer weiteren Ausführung der Erfindung kann das dem Druckluftventil vorgeschaltete Fahrzeugaggregat eine Druckluftaufbereitungsanlage, eine Fahrzeugbremse, eine Servokupplung oder dergleichen sein. Entscheidend für die Arbeitsweise des erfindungsgemäßen Behälters ist die Bereithaltung getrockneter und gereinigter Luft für die zusätzlich am Behälter angeschlossenen Fahrzeugaggregate. Entsprechend des jeweiligen Fahrzeugaggregates kann das mit diesem verbundene Druckluftventil durch ein Kupplungsservoventil, ein Motorwagenbremsventil oder dergleichen gegeben sein.

Gemäß einer weiteren Ausgestaltung der Erfindung können die zusätzlichen Fahrzeugaggregate durch ein Schaltgetriebe, ein Verteilergetriebe, Achsen oder dergleichen gegeben sein.

Gemäß einer weiteren Ausgestaltung der Erfindung kann der Behälter eine an die Außenkontur des ihn tragenden Fahrzeugaggregates angepaßte Form aufweisen. Somit beansprucht der Behälter nur geringen Bauraum. Die Befestigung des Behälters an einem Fahrzeugaggregat kann durch eine Verschraubung, Verrastung oder dergleichen realisiert sein.

Der leitungsmäßige Anschluß des Behälters an die jeweiligen Luftauslässe der Fahrzeugaggregate bzw. an das wenigstens eine Druckluftventil, kann durch Steckanschlüsse oder dergleichen realisiert sein.

Gemäß einer weiteren Ausgestaltung der Erfindung kann der Behälter durch das an einem Kupplungskraftverstärker der Servokupplung angeflanschte Kupplungsgehäuse gebildet sein. Somit kann in vorteilhafter Weise die von einer Entlüftung des Kupplungskraftverstärkers entweichende Luft in das Innere des Kupplungsgehäuses geleitet werden. Da der Kupplungskraftverstärker direkt am Kupplungsgehäuse der Servokupplung angeflanscht ist, sind für diesen Anschluß keine zusätzlichen Verbindungsleitungen erforderlich. Auch kann der zusätzliche Behälter zur Bevorratung gesäuberter und getrockneter Luft durch die Nutzung des bereits vorhandenen Kupplungsgehäuses ersatzlos entfallen. In vorteilhafter Weise ist innerhalb des den Druckausgleich für die verschiedenen Fahrzeugaggregate sicherstellenden Kupplungsgehäuses eine hohe Spülhäufigkeit mit gereinigter Luft sichergestellt.

Gemäß einer weiteren Ausgestaltung der Erfindung können die Luftauslässe der zusätzlichen Fahrzeugaggregate in einer oberseitig des Kupplungsgehäuses angeschlossenen Sammelleitung zusammengeführt sein. Unterseitig des Kupplungsgehäuses kann ein Druckausgleichsventil vorgesehen sein, mittels diesem ein zu hoher Druck im Kupplungsgehäuse abbaubar ist und Kupplungsabrieb sowie andere Schmutzpartikel ausblasbar sind.

Nachstehend ist die erfindungsgemäße Lösung anhand zweier in der Zeichnung dargestellter Ausführungsbeispiele näher erläutert.

In der Zeichnung zeigen:
- Fig. 1: schematisch ein Entlüftungssystem für Fahrzeugaggregate mit abgeschlossenen Ölhaushalten und
- Fig. 2: ausschnittsweise eine Servokupplung als Bestandteil eines Entlüftungssystems gemäß Fig. 1.

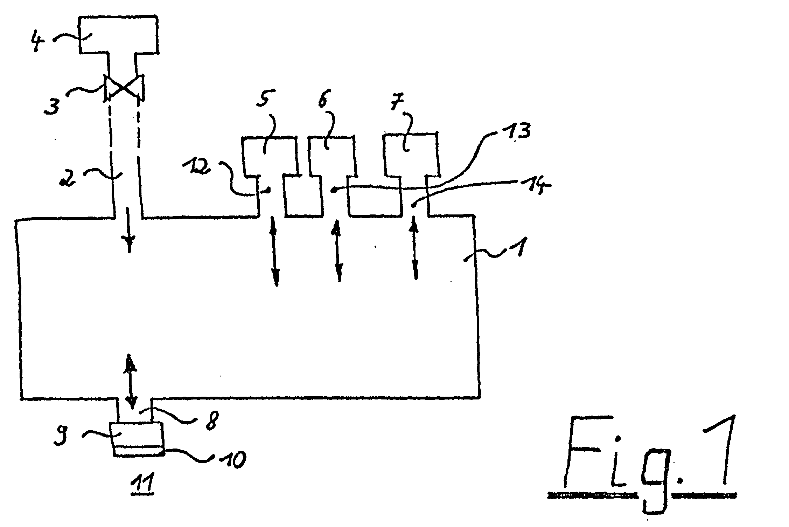

In Fig. 1 ist an einer Auslaßöffnung 2 eines mit einem Druckluftventil 3 versehenen Fahrzeugaggregates 4 ein separater Behälter 1 angeschlossen. Des weiteren steht der separate Behälter 1 mit Luftauslässen 12, 13, 14 zusätzlich vorhandener Fahrzeugaggregate 5, 6, 7 mit abgeschlossenen Ölhaushalten leitungsmäßig in Verbindung. Der Behälter 1 weist ausgangsseitig eine Auslaßöffnung 8 auf. An dieser ist in der hier gezeigten Version eine Drosselstelle 9 angeordnet, die gegebenenfalls nur in Richtung einer Umgebung 11 durchlässig ist. An der Drosselstelle 9 ist zusätzlich ein Filter 10 angebracht. Die Wirkungsweise des separaten Behälters 1 basiert darauf, zunächst eine im Fahrzeugeinsatz, beispielsweise durch Kupplungsbetätigung entstehende, bereits gereinigte Abluft aus dem Druckluftventil 3 für die reinigende Spülung des Behälters 1 vorzusehen. Bei Unterdruck in den genannten Fahrzeugaggregaten 5, 6, 7, beispielsweise durch Abkühlung ausgelöst, kann diese gereinigte Abluft bei Bedarf für die Fahrzeugaggregate 5, 6, 7 bereitgestellt werden. Die Anzahl zusätzlich an den separaten Behälter 1 anschließbarer Fahrzeugaggregate mit Ölhaushalten ist beliebig erweiterbar. Der Behälter 1 kann gemäß einer hier nicht gezeigten Version eine auf die jeweiligen Raumverhältnisse im Fahrzeug abgestimmte Form aufweisen. Dabei kann der Behälter 1 entsprechend einer Außenkontur eines Fahrzeugaggregates 4, 5, 6, 7 geformt sein und an dieser Außenkontur raumsparend anliegen.

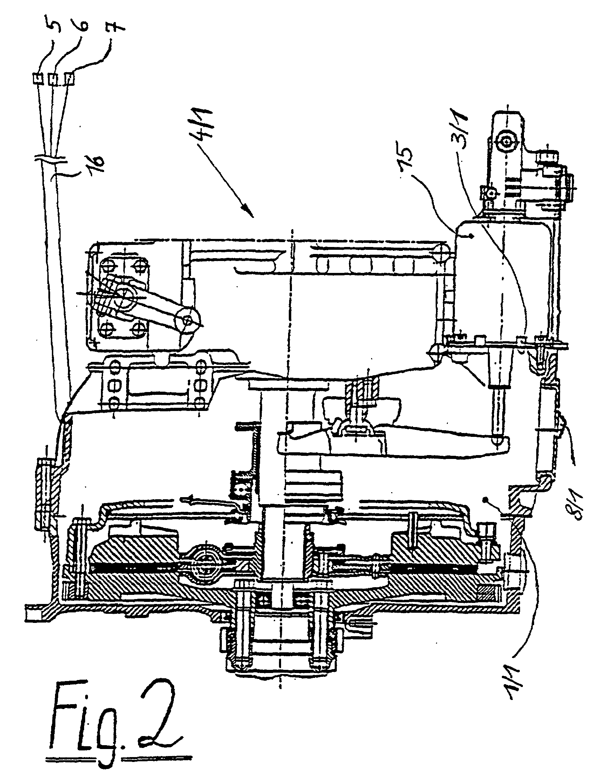

In Fig. 2 ist als Bestandteil eines Entlüftungssystems für Fahrzeugaggregate 5, 6, 7 mit abgeschlossenen Ölhaushalten ausschnittsweise eine Servokupplung 4/1 dargestellt. Deren Kupplungsgehäuse 1/1 dient zur Aufnahme und zum Druckausgleich der aus den zusätzlichen Fahrzeugaggregaten 5, 6, 7 stammenden und über eine gemeinsame Sammelleitung 16 an der Oberseite des Kupplungsgehäuses 1/1 eingeleiteten Abluft.

An das Kupplungsgehäuse 1/1 der Servorkupplung 4/1 ist des weiteren ein Kupplungskraftverstärker 15 angeflanscht. In dem hier gezeigten Ausführungsbeispiel ist die Abluft des Kupplungskraftverstärkers 15 über eine Entlüftung 3/1 in das Kupplungsgehäuse 1/1 einleitbar, so daß in dessen Innenraum stets gereinigte und getrocknete Luft für die an dem Kupplungsgehäuse 1/1 leitungsmäßig angeschlossenen, zusätzlichen Fahrzeugaggregate 5, 6, 7 bereitgehalten ist. Gemäß Fig. 1 kann die Anzahl der zusätzlich an das Kupplungsgehäuse 1/1 anschließbaren Fahrzeugaggregate mit Ölhaushalten beliebig erweiterbar sein.

## Patentansprüche

1. Entlüftungssystem für Fahrzeugaggregate (4,5, 6, 7) mit Ölhaushalten, **dadurch gekennzeichnet, daß** ausgangsseitig eines gereinigte Luft führenden Druckluftventiles (3) eines Fahrzeugaggregates (4) ein separater Behälter (1) angeschlossen ist, der leitungsmäßig mit Luftauslässen (12, 13, 14) zusätzlicher Fahrzeugaggregate (5, 6, 7) verbunden ist und der eine mit einer Umgebung (11) in Verbindung stehende Auslaßöffnung (8) aufweist.

2. Entlüftungssystem nach Anspruch 1, **dadurch gekennzeichnet, daß** an der Auslaßöffnung (8) eine Drosselstelle (9) vorgesehen ist.

3. Entlüftungssystem nach Anspruch 2, **dadurch gekennzeichnet, daß** die Drosselstelle (9) nur in Richtung der Umgebung (11) durchlässig ist.

4. Entlüftungssystem nach einem der Ansprüche 2 und 3, **dadurch gekennzeichnet, daß** anstelle der Drosselstelle (9) oder zusätzlich zu dieser ein Filter (10) installiert ist.

5. Entlüftungssystem nach Anspruch 1, **dadurch gekennzeichnet, daß** das dem Druckluftventil (3) vorgeschaltete Fahrzeugaggregat (4) eine Druckluftaufbereitungsanlage, eine Fahrzeugbremse, eine Servokupplung (4/1) oder dergleichen ist.

6. Entlüftungssystem nach Anspruch 1, **dadurch gekennzeichnet, daß** die zusätzlichen Fahrzeugaggregate (5, 6, 7) durch ein Schaltgetriebe, ein Verteilergetriebe, Achsen oder dergleichen gegeben sind.

7. Entlüftungssystem nach einem oder mehreren der vorangegangenen Ansprüche 1 bis 6, **dadurch gekennzeichnet, daß** der Behälter (1) eine an die Außenkontur des ihn tragenden Fahrzeugaggregates (4, 5, 6, 7) angepaßte Form aufweist.

8. Entlüftungssystem nach einem oder mehreren der vorangegangenen Ansprüche 1 bis 7, **dadurch gekennzeichnet, daß** der Behälter (1) durch das an einem Kupplungskraftverstärker (15) der Servokupplung (4/1) angeflanschte Kupplungsgehäuse (1/1) gebildet ist.

9. Entlüftungssystem nach Anspruch 8, **dadurch gekennzeichnet, daß** die Luftauslässe (12, 13, 14) der zusätzlichen Fahrzeugaggregate (5, 6, 7) in einer oberseitig des Kupplungsgehäuses (1/1) angeschlossenen Sammelleitung (16) zusammengeführt sind, und daß unterseitig des Kupplungsgehäuses (1/1) ein Druckausgleichsventil (8/1) vorgesehen ist.

## Claims

1. Breather system for vehicle units (4, 5, 6, 7) with oil reservoirs, **characterised in that** a separate reservoir (1) is connected to the output side of a clean-air-conducting compressed-air valve (3) of a vehicle unit (4) and, via lines, to air outlets (12, 13, 14) of additional vehicle units (5, 6, 7) and is provided with an outlet orifice (8) connected to a periphery (11).

2. Breather system according to Claim 1, **characterised in that** the outlet orifice (8) is provided with a constriction device (9).

3. Breather system according to Claim 2, **characterised in that** the constriction device (9) allows passage only in the direction of the periphery (11).

4. Breather system according to the Claims 2 and 3, **characterised in that** a filter (10) is installed instead of the constriction device (9) or in addition to it.

5. Breather system according to Claim 1, **characterised in that** the vehicle unit (4) upstream of the compressed-air valve (3) is a compressed-air purifying and drying system, a vehicle brake system, a servo clutch (4/1) or something similar.

6. Breather system according to Claim 1, **characterised in that** the additional vehicle units (5, 6, 7) are provided in the form of a manual gearbox, a transfer case, axles or something similar.

7. Breather system according to one or several of the aforementioned Claims 1 to 6, **characterised in that** the reservoir (1) has a shape adapted to the outer contour of the vehicle unit (4, 5, 6, 7) carying it.

8. Breather system according to one or several of the aforementioned Claims 1 to 7 **characterised in that** the reservoir (1) is provided in the form of the clutch housing (1/1) flanged on to a clutch booster (15) of the servo clutch (4/1).

9. Breather system according to Claim 8, **characterised in that** the air outlets (12, 13, 14) of the additional vehicle units (5, 6, 7) are combined into a collector line (16) connected to the upper side of the clutch housing (1/1) and that a pressure compensation valve (8/1) is fitted to the underside of the clutch housing (1/1).

## Revendications

1. Système d'évacuation d'air pour des éléments d'équipement de véhicule (4, 5, 6,7) munis de réserves d'huile,
**caractérisé en ce qu'**
un réservoir séparé (1) est branché à la sortie d'une soupape d'air comprimé (3) conduisant de l'air purifié d'un équipement de véhicule (4), ce réservoir étant relié par une conduite aux sorties d'air (12, 13, 14) d'éléments d'équipement (5, 6, 7) supplémentaires et ce réservoir comporte un orifice de sortie (8) communiquant avec l'extérieur (11).

2. Système d'évacuation d'air selon la revendication 1,
**caractérisé en ce que**
l'orifice de sortie (8) comporte un point d'étranglement (9).

3. Système d'évacuation d'air selon la revendication 2,
**caractérisé en ce que**
le point d'étranglement (9) s'ouvre en direction de l'environnement (11).

4. Système d'évacuation d'air selon l'une des revendications 2 et 3,
**caractérisé en ce qu'**
à la place du point d'étranglement (9) ou en plus de celui-ci, il est prévu un filtre (10).

5. Système d'évacuation d'air selon la revendication 1,
**caractérisé en ce que**
l'élément d'équipement de véhicule (4) en amont de la soupape d'air comprimé (3) est une installation de préparation d'air comprimé, un frein de véhicule, un servo-embrayage (4/1) ou un moyen analogue.

6. Système d'évacuation d'air selon la revendication 1,
**caractérisé en ce que**
l'élément d'équipement supplémentaire (5, 6, 7) est la boîte de vitesse, la boîte de transmission ou les essieux ou des moyens analogues.

7. Système d'évacuation d'air selon l'une ou plusieurs des revendications 1 à 6,
**caractérisé en ce que**
le réservoir (2) a une forme adaptée au contour extérieur de l'élément de véhicule (4, 5, 6, 7) qui le porte.

8. Système d'évacuation d'air selon l'une ou plusieurs des revendications 1 à 7,
**caractérisé en ce que**
le réservoir (1) est formé par un carter d'embrayage (11) fixé à l'amplificateur de force d'embrayage (15) de l'embrayage assisté (4/1).

9. Système d'évacuation d'air selon la revendication 8,
**caractérisé en ce que**
les sorties d'air (12, 13, 14) des éléments d'équipement supplémentaires (5, 6, 7) du véhicule sont réunis dans une conduite collectrice (16) reliée en partie haute au carter d'embrayage (1/1) et en partie basse de ce carter d'embrayage (1/1) il est prévu une soupape d'équilibrage de pression (8/1).
